# EUROPEAN PATENT SPECIFICATION

(11) **EP 2 337 469 B1**
(45) Date of publication and mention of the grant of the patent: **30.08.2017**
(21) Application number: 09816997.2
(22) Date of filing: 28.09.2009
(51) Int. Cl.: A43B 13/28, A43B 13/12, A43B 13/14, A43B 7/16, B29D 35/14, A43B 9/00, A43B 13/18, A43B 23/02, A43B 23/04

(54) **SHOE HAVING A MIDSOLE WITH HEEL SUPPORT**
SCHUH MIT EINER MITTELSOHLE MIT ABSATZSTÜTZE
CHAUSSURE COMPRENANT UN INTERCALAIRE AVEC SOUTIEN DU TALON

(30) Priority: 26.09.2008 US 194302 P
(43) Date of publication of application: 29.06.2011
(73) Proprietor: NIKE Innovate C.V., Beaverton, OR 97005-6453 (US)
(72) Inventor: BEREND, Thomas, Beaverton, OR 97005 (US); DEAN, Anthony, Beaverton, OR 97005 (US); FUSCO, Ciro, Beaverton, OR 97005 (US)
(74) Representative: Beattie, Alex Thomas Stewart
(86) International application number: PCT/US2009/058624
(87) International publication number: WO 2010/037033

(56) References cited:
- WO-A2-2007/123688
- WO-A2-2007/139832
- US-A- 4 638 576
- US-A- 6 023 857
- US-A- 6 061 929
- US-A1- 2004 123 495
- US-A1- 2004 154 188
- US-A1- 2004 226 113
- US-A1- 2006 191 163
- US-A1- 2007 028 484
- US-A1- 2007 204 485

## Description

### TECHNICAL FIELD

The present invention relates to athletic footwear. More particularly, the present invention relates to a shoe having a midsole with heel support.

### BACKGROUND OF THE INVENTION

Shoes, especially shoe uppers, have traditionally been assembled from a relatively large number of three dimensional components. Both the large number and the three dimensional nature of these components have required a great deal of labor to assemble a single shoe. Decreasing the labor required to manufacture a shoe by a meaningful amount is not possible with standard shoe designs.

WO2007/123688 discloses an apparatus comprising a stability layer dimensioned to be positioned within a shoe. The apparatus may comprise a stability wall extending downward from a heel portion of the stability layer. The stability wall may comprise a back section dimensioned to curve around a back side of the heel portion. The stability wall may also comprise at least one of a lateral side section and/or a medial side section. The lateral side section may extend along a lateral side of the heel portion and the medial side section may extend along a medial side of the heel portion. A method may comprise providing a stability layer and a midsole layer. The method may also comprise positioning the stability layer on the midsole layer.

US6023857 discloses a shoe including an outsole, an upper and a midsole. The outsole has a bottom surface with a central section. The upper has a base portion defined by a bottom peripheral edge of the upper. The upper is secured directly to the outsole around substantially the entire bottom peripheral edge. The midsole is positioned within an interior of the upper above the base portion of the upper. The shoe has a median sole thickness defined by the median distance between a top surface of the midsole and a bottom surface of the outsole. The midsole has a median midsole thickness defined by the median distance between the top surface of the midsole and a bottom surface of the midsole. The median midsole thickness is at least half the median sole thickness.

US2004/123495 discloses an article of footwear having an upper, a foot-supporting member, and a sole structure. The foot-supporting member includes a heel region located at a greater elevation than a forefoot region, thereby defining a recess under the heel region. The sole structure includes a midsole that forms a protrusion on the interior of the footwear. The protrusion mates with the recess to provide support for the heel region. The foot-supporting member may also incorporate pronation control characteristics, including a downward cant from a medial to a lateral side of the foot-supporting member and a region of reduced support generally underlying the first metatarsal. To further reduce the rate of pronation, the sole structure includes a region in the rear-lateral corner that is more compressible than other areas of the sole structure.

### SUMMARY OF THE INVENTION

The present invention relates to shoes having a midsole configured to provide heel support for a wearer. Midsoles in accordance with the present invention may permit the elimination or reduction of a heel counter in an upper and may further facilitate the attachment of an upper and midsole. These shoe designs and/or manufacturing methods reduce the specialized individual labor required for shoe production, while avoiding high costs associated with highly automated manufacturing equipment.

The present invention relates to a method having the steps as defined in claim 1.

### BRIEF DESCRIPTION OF THE DRAWING

FIG. 1A illustrates the initial layering step for upper creation in accordance with the present invention;
FIG. 1B illustrates examples of upper components associated with the layering step depicted in FIG.1A, in accordance with the present invention;
FIG. 2 illustrates the heat press step for upper creation in accordance with the present invention;
FIG. 3 illustrates the step for upper creation involving cutting out a pattern perimeter in accordance with the present invention;
FIG. 4 is a top plan view of upper components designed for uni-body construction of shoes in accordance with an embodiment of the present invention;
FIG. 5 illustrates the step for uni-body shoe construction involving attachment of an upper component to the flange of a midsole unit in accordance with an embodiment of the present invention;
FIG. 6 illustrates the step for uni-body shoe construction involving heel formation and attachment of an upper component to the flange of a midsole unit in accordance with an embodiment of the present invention;
FIG. 7 further illustrates the step for heel formation and attachment of an upper component to the flange of a midsole unit in accordance with an embodiment of the present invention;
FIG. 8 is a perspective view of a finished uni-body construction running shoe in accordance with the present invention;
FIG. 8B is a perspective view of an example of a finished uni-body construction running shoe not in accordance with the present invention;
FIGS. 9A-D are lateral side elevational views of examples of uni-body running shoes in accordance with an embodiment of the present invention;
FIG. 9E is a lateral side elevational view of the midsole and outsole sections of uni-body running shoes in accordance with an embodiment of the present invention;
FIG. 10 is a lateral side elevational view of a finished uni-body construction basketball shoe in accordance with an embodiment of the present invention;
FIG. 11A is a cross-sectional view of the sole unit associated with the basketball shoe depicted in FIG. 10;
FIG. 11B is a lateral side profile view of the sole unit associated with the basketball shoe depicted in FIG. 10;
FIG. 11C is a top plan view of the outsole associated with the basketball shoe depicted in FIG. 10;
FIG. 11D is a medial side profile view of the sole unit associated with the basketball shoe depicted in FIG. 10;
FIGS. 11E-G are cross-sectional views of the of forefoot, midfoot and heel portions of the sole unit associated with the basketball shoe depicted in FIG. 10;

### DETAILED DESCRIPTION OF THE INVENTION

Shoes in accordance with the present invention are designed to enable the efficient manufacturing of customized shoes. Shoe model options in accordance with the present invention may include, for example, a running shoe model and a basketball shoe model, although other shoes in accordance with the present invention may be constructed. In accordance with the present invention, upper forms of shoes are manufactured by a flat forming process, whereby the upper pattern is kept in a two-dimensional shape for most of the upper assembly and then stitched, glued, molded or otherwise affixed into a three dimensional form in the final stage of upper assembly. Shoes having midsoles providing heel support in accordance with the present invention may utilize traditional uppers fabricated from a plurality of pieces, although the specific example described herein further includes a flat formed upper to achieve additional construction efficiencies. The flat forming process minimizes the amount of labor intensive stitching traditionally needed to assemble a three dimensional upper form.

The upper forms are then coupled with midsole structures designed to permit efficient shoe production. The uni-body midsole structures may be comprised of dual-hardness phylon, molded into a three dimensional shape designed to provide heel support. This uni-body midsole design eliminates the need to incorporate a heel counter into the upper form, thereby reducing the number of processes traditionally required to assemble a three-dimensional upper form. The uni-body midsoles are also designed with one or more flange to enable attachment of the upper form. This flange(s) may assist in converting the upper from a two-dimensional to a three-dimensional form.

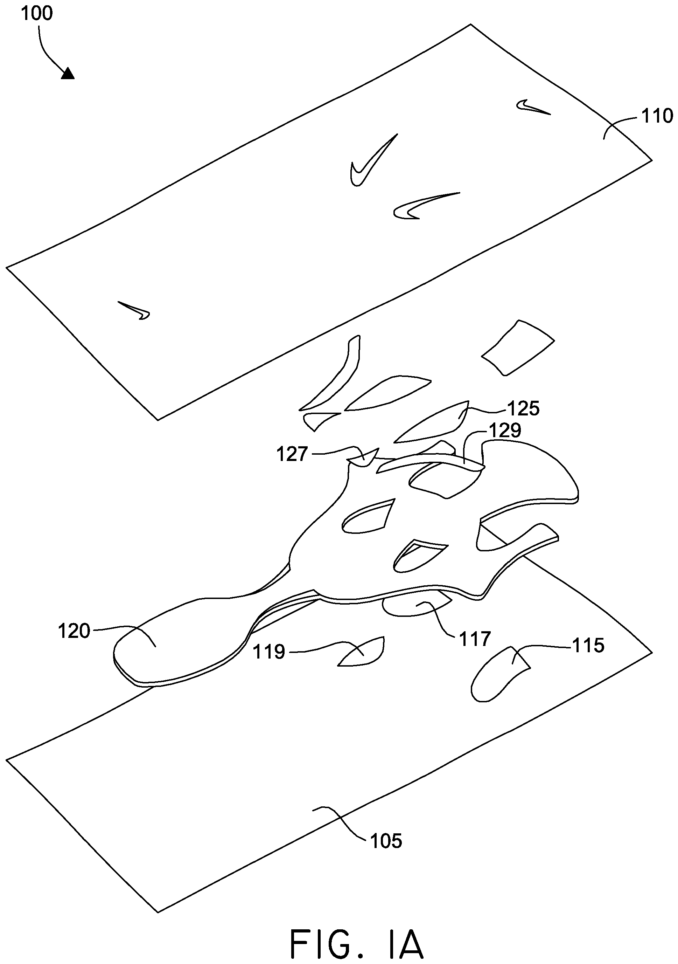

Referring now to FIG. 1A, the initial layering step 100 for upper creation in accordance with the present invention is illustrated. In step 100, shoe upper components and hot-melt films (not shown) may be cut and arranged in between a lining layer 105 and an external layer 110. The upper components layered in between lining layer 105 and external layer 110 may include, internal foams 115, 117, 119, a lining foam 120, and reinforcement pieces 125, 127, 129. Lining layer 105 may include a moisture-wicking textile for removing excess moisture from the area immediately surrounding the foot. Suitable materials for lining layer 105 include polyester and recycled polyester. Other suitable materials for lining layer 105 will become readily apparent to those skilled in the art, given the benefit of this disclosure.

In step 100, internal foams 115, 117 and 119 of different shapes and sizes as illustrated in FIG. 1A may be placed upon lining layer 105. Internal foams 115, 117 and 119 may be cut into shapes consistent with conventional shoe design and may include, a collar, vamp, quarter and tongue. Internal foam elements 115, 117, and 119 enhance the structure and comfort of the upper and can be formed of material such as polyurethane foam.

Lining foam 120 is layered over the internal foams 115, 117 and 119 in step 100. Lining foam 120 forms a barrier between lining layer 105 and external layer 110, and enhances the comfort and three-dimensional form of the shoe. In alternative embodiments of the invention, lining foam 120 may be replaced by a forming foam or other reinforcement materials conventionally used in shoe upper manufacture.

In step 100, reinforcement pieces 125, 127, and 129 of different shapes and sizes as illustrated in FIG. 1A may be placed upon lining foam 120. Reinforcement pieces 125, 127 and 129 may be cut into shapes consistent with conventional shoe design and may include vamp and eyestay reinforcements. External layer 110 is placed above the reinforcement pieces 125, 127 and 129 in layering step 100. External layer 110 forms the outer surface of the upper and may include textile elements for resisting abrasion and providing breathability. To enable the a customer to customize the appearance of the upper, external layer 110 may be altered by various dying, digital printing, embossing and embroidering techniques. Suitable materials for external layer 110 include synthetic leather and polyester mesh, although other materials including natural materials, may be used in accordance with the present invention. Other suitable materials for external layer 110 will become readily apparent to those skilled in the art, given the benefit of this disclosure.

In step 100, hot-melt films (not shown) may be layered amongst the upper components between lining layer 105 and external layer 110. Upon heat pressing, these films act to adhesively bond the upper components between lining layer 105 and external layer 110. The hot-melt films may be composed of materials such as thermoplastic polyurethane (TPU) film. The TPU film(s) may be integral to one or more sides of the other layers, such as lining layer 105 and/or external layer 110.

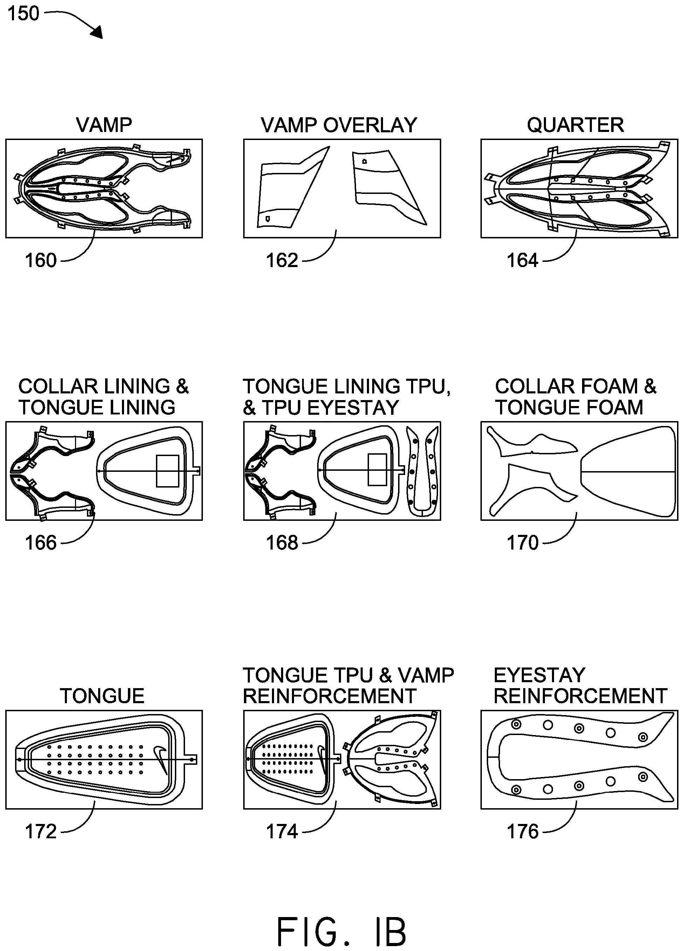

Referring now to FIG. 1B, examples of various upper components associated with the layering step 100 are illustrated and designated generally as reference number 150. Upper components 150 may be cut into shapes consistent with conventional shoe design and may include, a collar, vamp, quarter and tongue. Since the uni-body, dual hardness midsoles associated with the present invention provide sufficient heel support to eliminate the need for a heel counter in the upper form, upper components 150 may not include traditional plastic, thermoplastic resin, TPU or nylon heel counter elements.

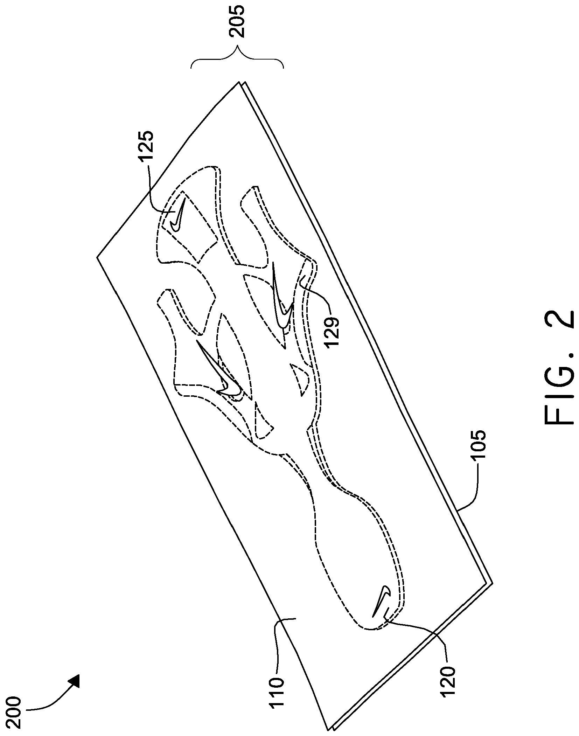

Referring now to FIG. 2, the heat press step 200 for upper creation in accordance with the present invention is illustrated. In heat press step 200, the layers from step 100 may be heat pressed together to form a basic laminated upper form, designated generally as 205. Upper form 205 is formed when the layers from step 100 are heated under pressure. The specific temperature, pressure and time needed to laminate the upper form may vary according to the upper component being treated. For example, proper lamination of the quarter upper component may occur when treated at a pressure of 25 bars at 135 degrees Celsius for thirty seconds, and proper lamination of the tongue upper component may occur when treated at a pressure of 25 bars at 130 degrees Celsius for forty-five seconds.

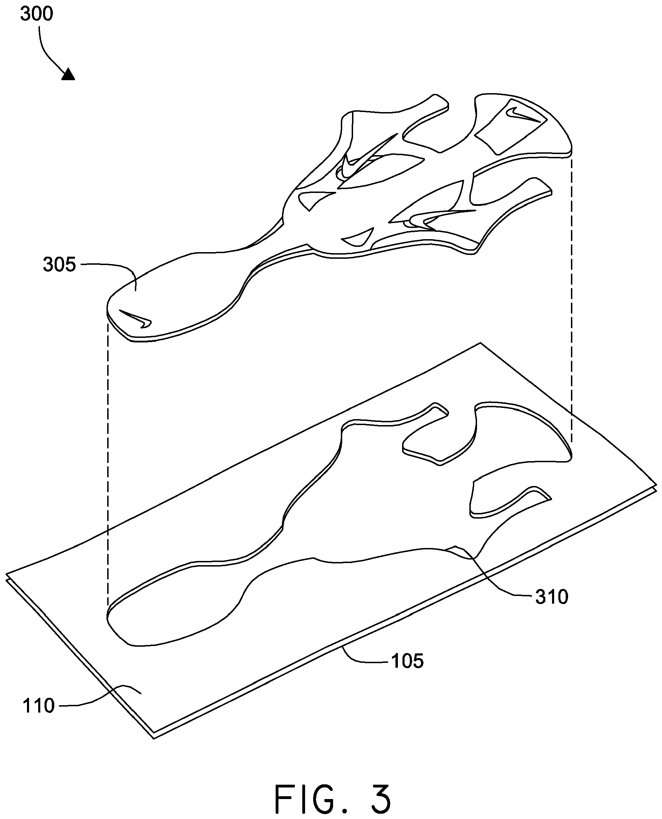

Referring now to FIG. 3, the third step 300 for upper creation in accordance with the present invention is illustrated. In step 300, the pattern perimeter of basic laminated upper form 205 may be cut out to form upper component 305. Step 300 may be performed using any type of cutting device such as a cutting die, shears and the like.

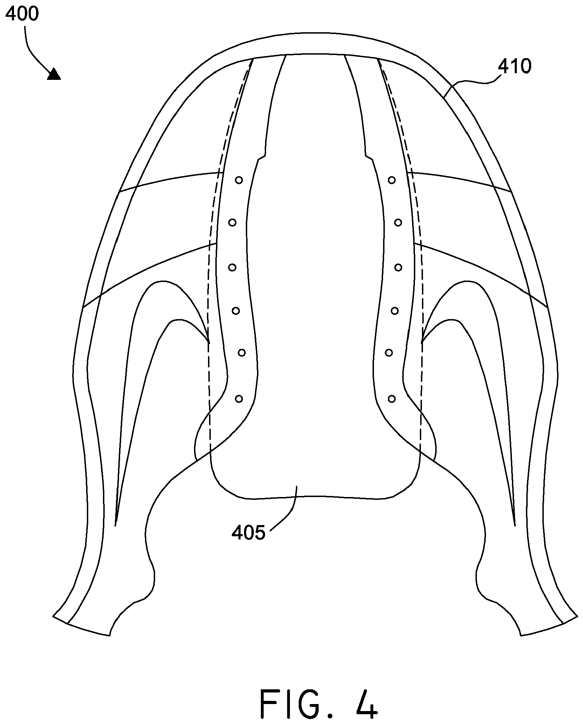

Referring now to FIG. 4, a top plan view of upper components designed for uni-body construction of shoes in accordance with an embodiment of the present invention is illustrated, and designated generally as reference number 400. The upper component 400 includes a tongue 405 and a upper form 410. The upper form 410 and tongue 405 may be made by the layering step 100, heat pressing step 200 and cutting step 300 as illustrated in FIGS. 1-3. The no sew techniques of steps 100, 200 and 300 facilitate the flat construction of upper form 410 and tongue 405. Tongue 405 may be attached to upper form 410 to create upper component 400 by stitching, chemical adhesive, welding (RF or ultrasonic), or any other attachment technique or technology. Upper component 400 may be finished with customization requirements. For example, upper component 400 may include all the embossing and printing aesthetics required by a particular customer.

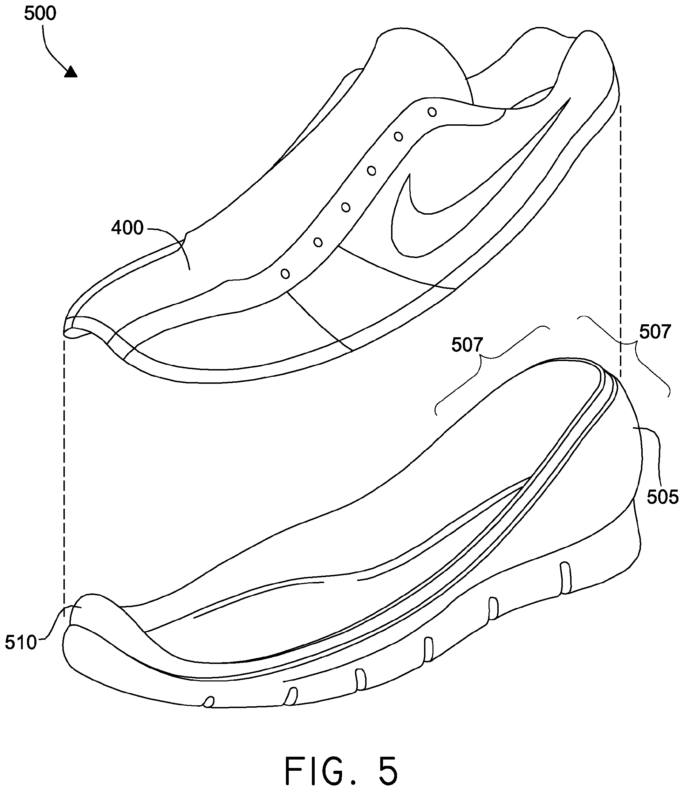

Referring now to FIG. 5, a step 500 for uni-body shoe construction involving attachment of an upper component to the flange of a midsole unit in accordance with an embodiment of the present invention is illustrated. In step 500, upper component 400 may be aligned with a midsole unit 505. The upper component 400 may be attached to the flange 510 of midsole unit 505 in step 500. For example, upper component 400 may be attached to flange 510 using conventional shoe manufacture techniques like stitching, gluing or a combination thereof. Attachment flange 510 may be around the entire perimeter of midsole 505 or may be at a plurality of points or regions around the perimeter of midsole 505. Flange 510 may be of a different hardness than other portions of midsole unit 505.

The design of the midsole unit 505 eliminates the need to incorporate a heel counter into the upper component 400. The depth of the interior heel region 507, of midsole 505, may form a rigid or semi-rigid area in the heel region that may hold the foot in place. The heel region 507 may extend around at least a portion of a wearer's heel in an as worn position, or when the wearer is wearing the shoe. Thus, the structural support provided by heel region 507 of the midsole 505 may eliminate the need for an internal heel counter in the upper component 400. Heel region 507 may, for example, be harder than the rest of the midsole unit 505. Absence of an internal heel counter in upper component 400 removes the traditional steps of molding the plastic, or other material used to form the heel counter, cooling the molded plastic to harden the heel counter and stitching an external layer of upper materials such as synthetic leather over the heal counter. Therefore, midsole 505 reduces the labor intensive steps generally needed for upper formation, particularly for the heel formation steps.

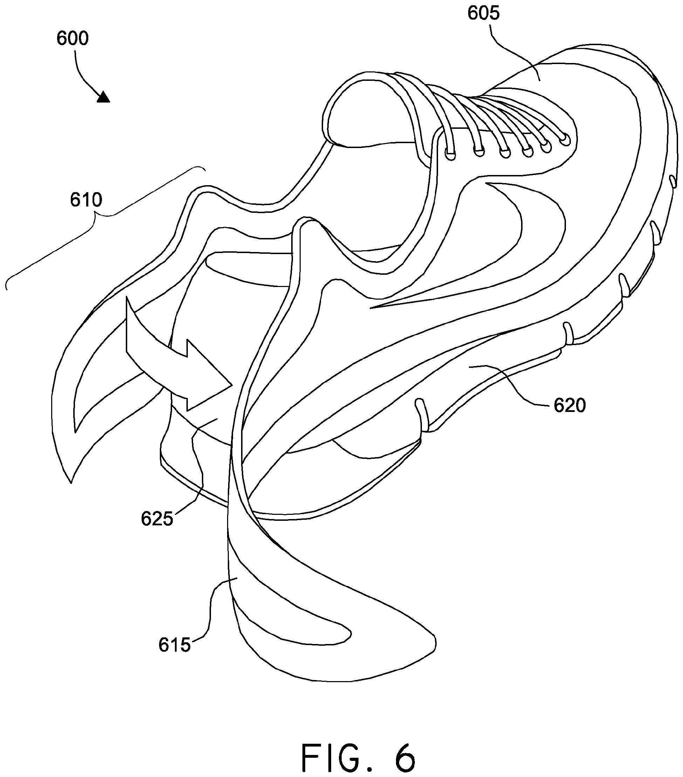

Referring now to FIG. 6, a step 600 for uni-body shoe construction involving heel formation and attachment of an upper component to the flange of a midsole unit in accordance with an embodiment of the present invention is illustrated. In step 600, upper component 605 may be attached to the flange 625 of midsole unit 620. For example, upper component 605 may be attached to the flange 625 by gluing, stitching or welding. Upper component 605 includes heel elements 610 and 615. Heel elements 610 and 615 may be formed as a part of the laminated upper component 605 using methods 100, 200 and 300. In step 600, heel element 610 may be folded as depicted in FIG. 6 and attached to the flange 625 of midsole 620. By combining the heel formation step 600 with attaching the upper component to the midsole step 500, the amount of stitching traditionally used to form a three dimensional heel component is reduced, thereby allowing for more efficient shoe production. Further, as shown in FIG. 6, the midsole unit 620 extends substantially under a wearer's foot in an as worn position, or when the wearer is actually wearing the shoe. This portion of the midsole that extends under a wearer's foot may have a hardness different from other portions of the midsole, including the heel region. For instance, the hardness of the midsole portion extending underneath the wearer's foot may be less than the hardness of the heel region, and vice versa.

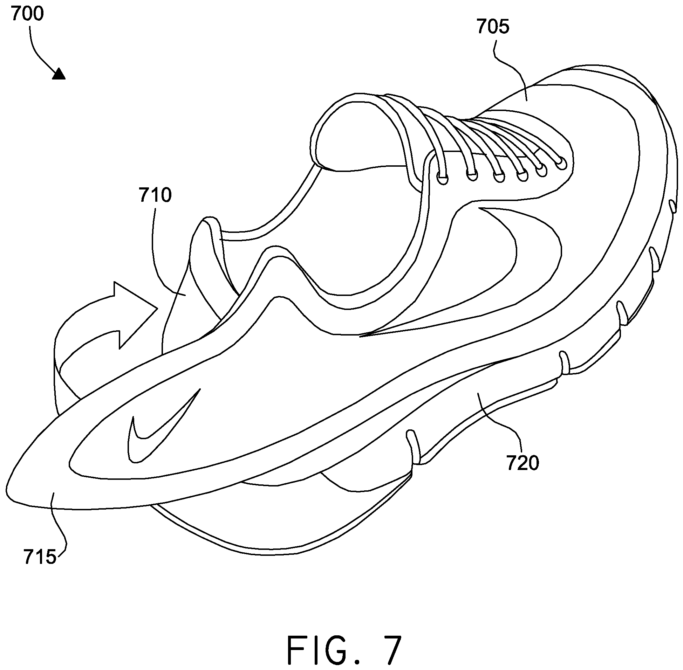

Referring now to FIG. 7, a further step 700 for heel formation and attachment of an upper component to the flange of a midsole unit in accordance with an embodiment of the present invention is illustrated. In step 700, upper component 705 is attached to midsole element 720 (e.g., midsole bed region). Upper component 705 includes heel elements 710 and 715, with heel element 710 being attached to sole unit 720 as illustrated in FIG. 6. In step 700, heel element 715 is folded onto heel element 710 as depicted in FIG. 7. Heel element 715 may be attached to heel element 710 and to sole unit 720 by stitching, gluing, or welding. Other methods of attachment of upper component 705 to midsole element 720 will become readily apparent to those skilled in the art, given the benefit of this disclosure.

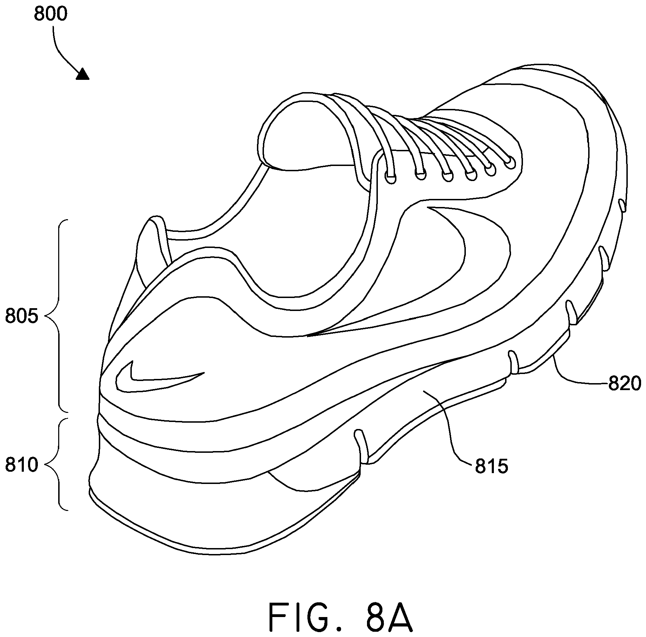

Referring now to FIG. 8A, a perspective view of a finished uni-body construction running shoe in accordance with an embodiment of the present invention is illustrated and designated generally with reference number 800. Running shoe 800 includes an upper 805 attached to a sole unit 810. Sole unit 810 is comprised of midsole 815 attached to an outsole 820. The outsole 820 may be affixed to the midsole opposing the upper.

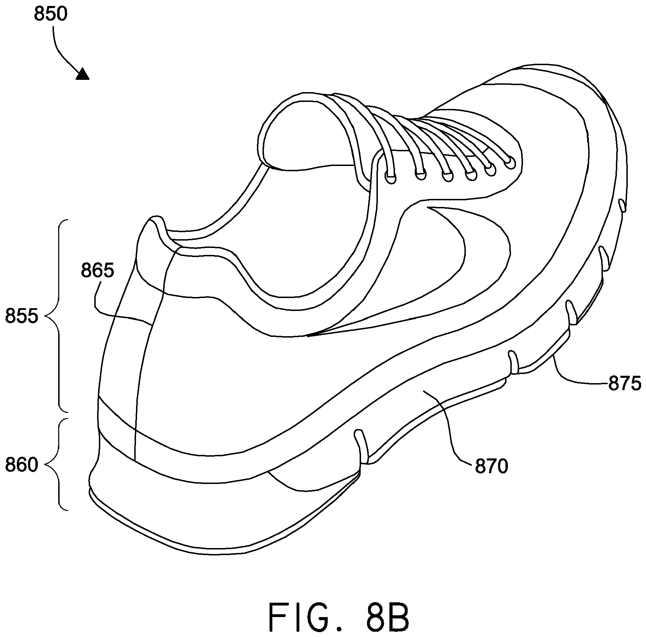

While FIGS. 6-8A illustrate an upper 805 wherein one heel element is wrapped around the other heel element (e.g., a first heel element and a second heel element), shown clearly by heel elements 610 and 615 in FIG. 6. An example not falling within the scope of the invention is illustrated in FIG. 8B, where the two heel elements are flush against one another so that stitching or some other method can be utilized to secure the two heel elements together, shown as reference number 865. Running shoe 850 includes an upper 855 attached to a sole unit 860. Sole unit 860 is comprised of midsole 870 attached to an outsole 875.

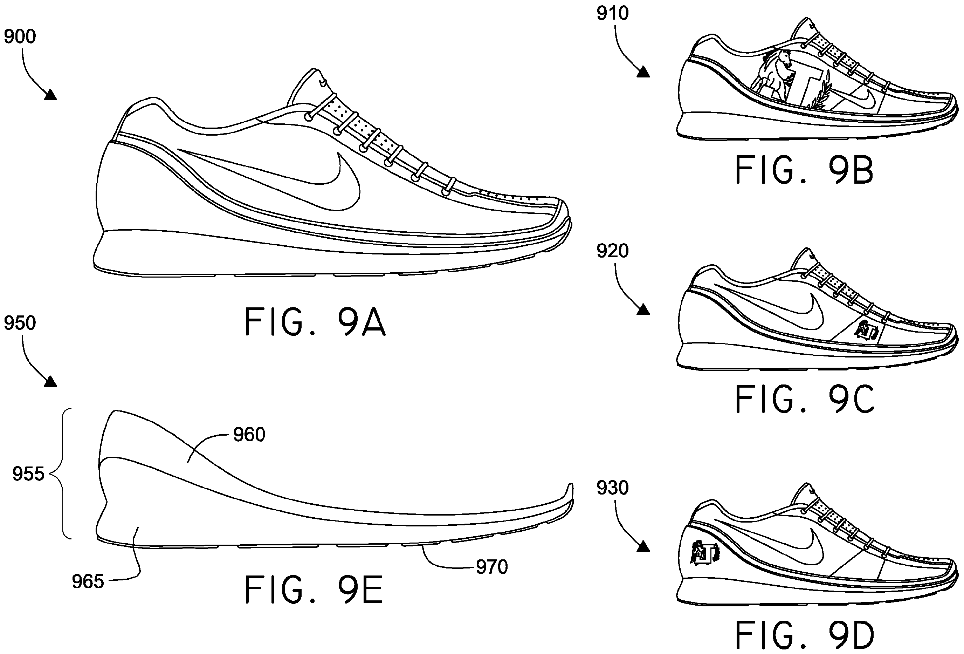

Referring now to FIGS. 9A-D, four lateral side elevational views of uni-body running shoes in accordance with an embodiment of the present invention, are illustrated and designated generally as 900, 910, 920 and 930 respectively. FIGS. 9A-D illustrate different options available in accordance with the present invention. For example, a shoe can include a standard graphic design as depicted in FIG. 9A or the shoe can be decorated with varsity designs as depicted in FIG. 9B.

Referring now to FIG. 9E, a lateral side elevational view of the midsole and outsole sections of uni-body running shoes, in accordance with an embodiment of the present invention is illustrated and designated generally as 950. The sole unit 950 includes midsole 955 and outsole 970. Midsole 955 is comprised of a hard layer 960 and a soft layer 965. Suitable materials for midsole 955 may include dual hardness phylon, although other materials may be used for midsole 1010. Suitable materials for outsole 970 may include carbon rubber or blown rubber, although other materials may be used for outsole 970. The dual layers of midsole 955 enable variation of the midsole. For example, midsole 955 may have a blue hard layer 960 (e.g., upper midsole portion) and a white soft layer 965 (e.g., lower midsole portion). In addition to the color of the midsole 955, the hardness of different midsoles can be varied to enhance performance for a particular shoe design or shoe type. For example, running shoes may require a softer midsole to provide a high degree of cushioning, while basketball soles may be harder to provide stability.

Manufacturing a shoe similar to that shown in various figures, in particular FIG. 9A, requires a plurality of steps, including, but not limited to, securing an upper midsole portion to a lower midsole portion. As mentioned above, these different portions may have a different hardness from one another, which may take into account variances such as a shoe type, a shoe design, or performance issues, all of which may be customized by the buyer of the shoe. an upper component may then be aligned with the midsole component. The upper component includes a first heel element and a second heel element, and the midsole component may have a heel region that extends around at least a portion of the wearer's heel, as described above. The upper component is then affixed to the midsole component, and the heel elements are secured to each other. The heel elements cover at least a portion of the heel region. According to the invention, one heel element is wrapped around, or overlaps, the other heel element. In an example not falling within the ambits of the invention, the two heel elements meet up in the middle of the heel of the shoe such that a second heel element does not overlap the first heel element, and are stitched or otherwise secured together. In this example, the heel elements are flush against one another, as shown by reference numeral 865 in FIG. 8B.

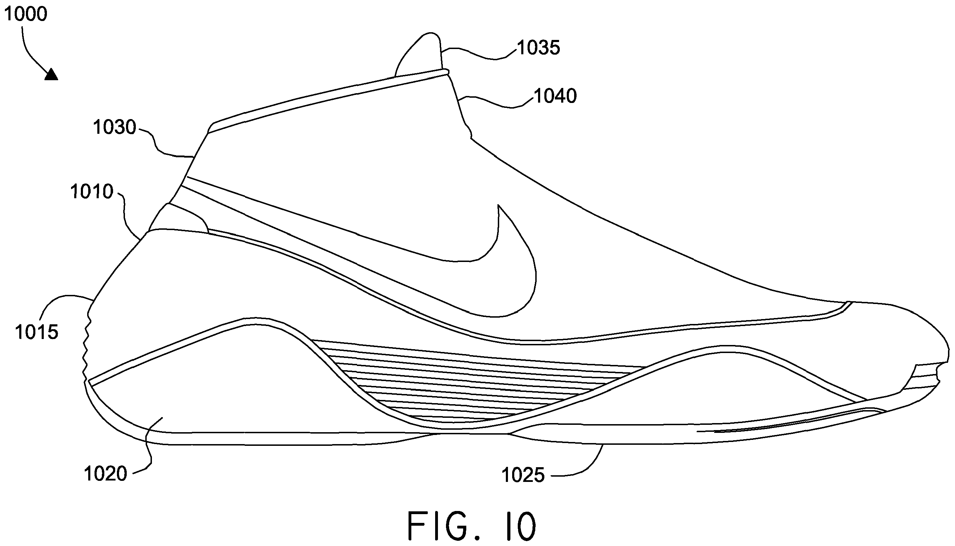

Referring now to FIG. 10, a lateral side elevational view of a finished uni-body construction basketball shoe, in accordance with an embodiment of the present invention is illustrated and designated generally as numeral 1000. Basketball shoe 1000 may include, a sole unit 1005 attached to an upper 1030. The sole unit 1005 may include a midsole 1010 and an outsole 1025, with midsole 1010 comprised of a first layer 1015 and second layer 1020. Midsole 1010 may be formed using a dual hardness phylon, although other materials may be used for midsole 1010. Upper 1030 may be attached to sole 1005 by stitching as shown in FIG. 10 or by gluing. Upper 1030 includes a tongue 1035 and collar fastening element 1040. The collar fastening element 1040 secures upper 1030 to the foot.

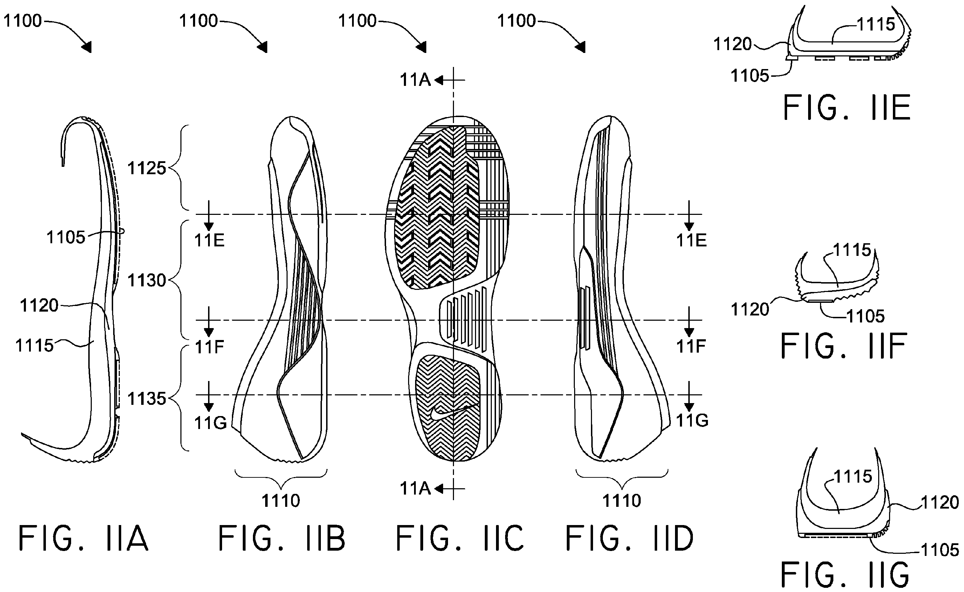

Referring now to FIGS. 11B-D, three views of the sole unit 1100 associated with the uni-body basketball shoe depicted in FIG. 10, in accordance with an embodiment of the present invention are illustrated. Sole unit 1100 includes an outsole 1105 and a midsole 1110, with midsole 1010 comprised of a first layer 1115 and second layer 1120. The second layer may be located underneath the first midsole layer in an as worn position. The midsole 1110 may be formed by heat treating a plurality of pre-formed phylon biscuits. The plurality of biscuits may be formed in an injection process that includes heating phylon pellets until molten and injecting them into pre-forms (e.g., molding cavities) within an injection mold. Typically, the plurality of biscuits includes at least a first biscuit that has a first density and a second biscuit that has a second density, or a first and second color. The method may further include the steps of arranging the biscuits into a receiving area (e.g., molding cavity) of the heat press, and integrating the plurality of biscuits to form the midsole by activating the heat press. The midsole layer 1115 may therefore have a different hardness and or color than the second midsole layer 1120. For example, as depicted in FIGS. 11A-G, midsole layer 1115 is comprised of soft injection phylon and midsole layer 1120 is comprised of hard injection phylon.

Referring now to FIGS. 11A, 11E-G, four cross sectional views of the sole unit associated with the uni-body basketball shoe depicted in FIG. 10, in accordance with an embodiment of the present invention are illustrated. The distribution of the dual density phylon layers 1115 and 1120 across the forefoot 1125, midfoot 1130 and heel 1135 regions of the sole unit is illustrated in FIGS. 11E-G.

## Claims

1. A method for manufacturing shoes customized to an order placed by a customer, the method comprising the steps of: providing a midsole (505, 620, 720, 815, 870, 955, 1010, 1115) comprising a heel region (507, 625, 1135) extending around at least a portion of a wearer's heel in an as worn position, the heel region (507, 1135) having a first hardness, and a midsole bed region extending substantially under a wearer's foot in an as worn position, the midsole bed region having a second hardness; affixing an outsole (820, 875, 970, 1025, 1105) to the midsole (505, 620, 720, 815, 870, 955, 1010, 1115) to form a sole unit (810, 860, 950, 1005, 1100) so that the outsole (820, 875, 970, 1025, 1105) is affixed to the midsole (505, 620, 720, 815, 870, 955, 1010, 1115) opposing the upper (400, 605, 705, 805, 855, 1030); and after forming the sole unit (810, 860, 950, 1005, 1100), affixing the midsole (505, 620, 720, 815, 870, 955, 1010, 1115) to an upper (400, 605, 705, 805, 855, 1030) including a first heel element (610, 710) and second heel element (615, 715), wherein the first heel element (610, 710) is folded around the heel region (507, 625, 1135) of the midsole and the second heel element (615, 715) is folded onto the first heel element (610, 710).

2. The method of claim 1, wherein the upper (400, 605, 705, 805, 855, 1030) is manufactured by way of a flat forming process whereby the upper (400, 605, 705, 805, 855, 1030) is maintained in a two-dimensional shape during its manufacture.

3. The method of claim 1, wherein a hardness of the heel region (507, 1135) is greater than the hardness of the midsole bed region.

4. The method of claim 1, wherein the midsole bed region is formed by heat treating a plurality of pre-formed EVA biscuits.

5. The method of claim 1, wherein the midsole bed region is comprised of an upper midsole portion (960) having a third hardness and a lower midsole portion (965) having a fourth hardness wherein the upper and lower midsole portions (960, 965) are affixed.

6. The method according to claim 1, wherein the first heel element (610) and the second heel element (615) cover at least a portion of the heel region.

7. The method of claim 6, wherein the midsole (955) is affixed to the upper (605) by way of a flange (625) secured to the midsole (955).

8. The method of claim 7, wherein the flange (625) extends at least partially around a perimeter of the midsole (955).

9. The method of claim 7, wherein the flange (625) has a different hardness than other portions of the midsole (955).

10. The method of claim 6, wherein the heel region (507, 625, 1135) has a greater hardness than other portions of the midsole (955).

## Patentansprüche

1. Verfahren zur Herstellung von entsprechend einer von einem Kunden aufgegebenen Bestellung maßgefertigten Schuhen, wobei das Verfahren die folgenden Schritte umfasst: Bereitstellen einer Mittelsohle (505, 620, 720, 815, 870, 955, 1010, 1115) umfassend einen Absatzbereich (507, 625, 1135), der sich um mindestens einen Teil des Absatzes eines Trägers herum in einer Trageposition erstreckt, wobei der Absatzbereich (507, 1135) eine erste Härte aufweist, und einen Mittelsohlen-Bettungsbereich, der sich im Wesentlichen unter dem Fuß eines Trägers in einer Trageposition erstreckt, wobei der Mittelsohlen-Bettungsbereich eine zweite Härte aufweist; Befestigen einer Außensohle (820, 875, 970, 1025, 1105) an der Mittelsohle (505, 620, 720, 815, 870, 955, 1010, 1115), um eine Sohleneinheit (810, 860, 950, 1005, 1100) zu bilden, sodass die Außensohle (820, 875, 970, 1025, 1105) an der Mittelsohle (505, 620, 720, 815, 870, 955, 1010, 1115) gegenüber dem Oberteil (400, 605, 705, 805, 855, 1030) befestigt ist; und, nach Bilden der Sohleneinheit (810, 860, 950, 1005, 1100), Befestigen der Mittelsohle (505, 620, 720, 815, 870, 955, 1010, 1115) an einem Oberteil (400, 605, 705, 805, 855, 1030) einschließlich eines ersten Absatzelements (610, 710) und zweiten Absatzelements (615, 715), worin das erste Absatzelement (610, 710) um den Absatzbereich (507, 625, 1135) der Mittelsohle herum gefaltet und das zweite Absatzelement (615, 715) auf das erste Absatzelement (610, 710) gefaltet ist.

2. Verfahren nach Anspruch 1, worin das Oberteil (400, 605, 705, 805, 855, 1030) mittels eines Flachformvorgangs hergestellt wird, wodurch das Oberteil (400, 605, 705, 805, 855, 1030) während seiner Herstellung in einer zweidimensionalen Form bleibt.

3. Verfahren nach Anspruch 1, worin eine Härte des Absatzbereichs (507, 1135) größer als die Härte des Mittelsohlen-Bettungsbereichs ist.

4. Verfahren nach Anspruch 1, worin der Mittelsohlen-Bettungsbereich durch Wärmebehandlung einer Mehrzahl von vorgeformten EVA-Biscuits gebildet wird.

5. Verfahren nach Anspruch 1, worin der Mittelsohlen-Bettungsbereich aus einem oberen Mittelsohlenteil (960) mit einer dritten Härte und einem unteren Mittelsohlenteil (965) mit einer vierten Härte besteht, worin die oberen und unteren Mittelsohlenteile (960, 965) befestigt werden.

6. Verfahren nach Anspruch 1, worin das erste Absatzelement (610) und das zweite Absatzelement (615) mindestens einen Teil des Absatzbereichs abdecken.

7. Verfahren nach Anspruch 6, worin die Mittelsohle (955) am Oberteil (605) mittels eines an der Mittelsohle (955) gesicherten Flansches (625) befestigt ist.

8. Verfahren nach Anspruch 7, worin sich der Flansch (625) mindestens teilweise um einen Umfang der Mittelsohle (955) herum erstreckt.

9. Verfahren nach Anspruch 7, worin der Flansch (625) eine sich von anderen Teilen der Mittelsohle (955) unterscheidende Härte aufweist.

10. Verfahren nach Anspruch 6, worin der Absatzbereich (507, 625, 1135) eine größere Härte als andere Teile der Mittelsohle (955) aufweist.

## Revendications

1. Procédé de fabrication de chaussures personnalisées selon une commande passée par un client, le procédé comprenant les étapes consistant à : fournir une semelle intercalaire (505, 620, 720, 815, 870, 955, 1010, 1115) comprenant une région de talon (507, 625, 1135) s'étendant autour d'au moins une partie du talon d'un utilisateur dans une position portée, la région de talon (507, 1135) ayant une première dureté, et une région d'assise de semelle intercalaire s'étendant sensiblement sous le pied d'un utilisateur en position portée, la région d'assise de semelle intercalaire ayant une deuxième dureté ; fixer une semelle d'usure (820, 875, 970, 1025, 1105) à la semelle intercalaire (505, 620, 720, 815, 870, 955, 1010, 1115) pour former un ensemble semelle (810, 860, 950, 1005, 1100), de sorte que la semelle d'usure (820, 875, 970, 1025, 1105) soit fixée à la semelle intercalaire (505, 620, 720, 815, 870, 955, 1010, 1115) à l'opposé de la tige (400, 605, 705, 805, 855, 1030) ; et après la formation de l'ensemble semelle (810, 860, 950, 1005, 1100), fixer la semelle intercalaire (505, 620, 720, 815, 870, 955, 1010,1115) à une tige (400, 605, 705, 805, 855, 1030) comprenant un premier élément de talon (610, 710) et un second élément de talon (615, 715), le premier élément de talon (610, 710) étant plié autour de la région de talon (507, 625, 1135) de la semelle intercalaire, et le second élément de talon (615, 715) étant plié sur le premier élément de talon (610, 710).

2. Procédé selon la revendication 1, dans lequel la tige (400, 605, 705, 805, 855, 1030) est fabriquée au moyen d'un processus de formation à plat dans lequel la tige (400, 605, 705, 805, 855, 1030) est maintenue sous une forme bidimensionnelle pendant sa fabrication.

3. Procédé selon la revendication 1, dans lequel une dureté de la région de talon (507, 1135) est supérieure à la dureté de la région d'assise de semelle intercalaire.

4. Procédé selon la revendication 1, dans lequel la région d'assise de semelle intercalaire est formée par un traitement thermique d'une pluralité de grappes préformées en EVA.

5. Procédé selon la revendication 1, dans lequel la région d'assise de semelle intercalaire est constituée d'une partie de semelle intercalaire supérieure (960) ayant une troisième dureté, et d'une partie de semelle intercalaire inférieure (965) ayant une quatrième dureté, les parties de semelle intercalaire supérieure et inférieure (960, 965) étant fixées.

6. Procédé selon la revendication 1, dans lequel le premier élément de talon (610) et le second élément de talon (615) couvrent au moins une partie de la région de talon.

7. Procédé selon la revendication 6, dans lequel la semelle intercalaire (955) est fixée à la tige (605) au moyen d'un rebord (625) fixé à la semelle intercalaire (955).

8. Procédé selon la revendication 7, dans lequel le rebord (625) s'étend au moins en partie autour d'un périmètre de la semelle intercalaire (955).

9. Procédé selon la revendication 7, dans lequel le rebord (625) a une dureté différente de celle d'autres parties de la semelle intercalaire (955).

10. Procédé selon la revendication 6, dans lequel la région de talon (507, 625, 1135) a une dureté supérieure à celle d'autres parties de la semelle intercalaire (955).
